# EUROPEAN PATENT APPLICATION

(11) **EP 1 344 750 A1**
(43) Date of publication of application: **17.09.2003**
(21) Application number: 01271330.1
(22) Date of filing: 14.12.2001
(51) Int. Cl.: C01G 25/02, C25D 11/26, H01G 9/04

(54) **METHOD OF FORMING TITANIUM OXIDE FILM AND TITANIUM ELECTROLYTIC CAPACITOR**

(30) Priority: 19.12.2000 JP 2000385056; 19.12.2000 JP 2000385071; 19.12.2000 JP 2000385086; 19.12.2000 JP 2000385101
(71) Applicant: TOHO TITANIUM CO., LTD., Chigasaki-shi, Kanagawa 253-8510 (JP)
(72) Inventor: ARAI, Yoshiyukio, TOHO TITANIUM CO., LTD., Chigasaki-shi, Kanagawa 253-8510 (JP)
(74) Representative: Parnham, Kevin
(86) International application number: JP0110981
(87) International publication number: WO02049965

(57) **Abstract**

A compact type large capacity titanium electrolytic capacitor having minimized leakage current is provided by forming a stable oxide film having a large dielectric constant on a titanium surface, wherein a titanium substrate having a titanium oxide film thereon having a thickness of 50 nm or more is subjected to calcination in vacuum or an inert gas atmosphere, thereby reducing the thickness of said oxide film to less than 50 nm and the calcined surface of said metal titanium substrate is subjected to oxidation, thereby re-forming an oxide film on the surface of said metal titanium substrate. The metal titanium substrate having the re-formed oxide film obtained by such method can be used as an anode for a titanium electrolytic capacitor.

## Description

### [Detailed description of the invention]

### [Application field in industry]

The present invention relates to a method for forming an oxide film and to an electric capacitor. Particularly, the present invention relates to a method for forming on a metal titanium substrate a dense oxide film having large electrostatic capacitance and excellent insulation property; and to a titanium electrolytic capacitor wherein the metal titanium substrate having a dense oxide film obtained by the method is used as an anode.

### [Background art]

As a compact type electrolytic capacitor having a large capacitance as represented by solid electrolytic capacitor, tantalum electrolytic capacitor and aluminum electrolytic capacitor have been commercially used.

In the tantalum electrolytic capacitor, a porous sintered body of metal tantalum is used as an electrode, and a dielectric oxide film is formed by anodic oxidation of the metal tantalum. The oxide film of tantalum obtained in this manner is extremely stable, and therefore, the resultant capacitor has an excellent dielectric property and a long life. On the other h4and, in the aluminum electrolytic capacitor, a metal aluminum foil or a sintered body is used and aluminum oxide as a dielectric is formed by anodic oxidation.

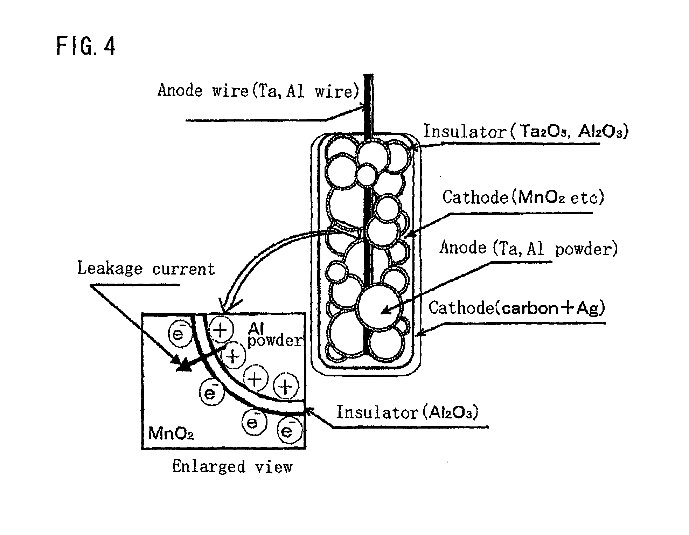

Fig. 4 shows one embodiment of a tantalum electrolytic capacitor or an aluminum electrolytic capacitor, shown together for convenience. In this figure, illustrated as an anode is a porous sintered body of a Ta powder having tantalum oxide (Ta₂O₅) as an insulator layer thereon, or a porous sintered body of an Al powder having aluminum oxide (Al₂O₃) as an insulator layer thereon, and as an anode lead wire a Ta wire or an Al wire is embedded in the sintered body. As a cathode, a solid electrolyte of manganese dioxide (MnO₂) and a carbon + Ag cathode (cathode conductive layer) are illustrated.

In the case of the tantalum electrolytic capacitor, for example, a tantalum powder having a particle size of 10 - 20 µm is subjected to compression molding by a press, and then sintered to forme a porous sintered body. This body is subjected to anodic oxidation to obtain an oxide film thereon. The surface area of this porous sintered body is extremely large and therefore a large electrostatic capacitance can be obtained. Subsequently, a manganese compound, such as manganese sulfate, is applied to the oxide film and subjected to heat treatment to obtain manganese oxide as a cathode or alternatively the porous sintered body is immersed in an aqueous solution of manganese nitrate and the immersed body is subjected to thermal decomposition in an electric furnace to obtain manganese dioxide. The latter procedure may be repeated to allow the manganese dioxide layer to grow until a sufficient electrolyte layer is obtained. As the result, the pores in the porous sintered body are thoroughly filled and covered with manganese dioxide. Alternatively, a capacitor can be prepared using a conductive macromolecular compound as a cathode. On the resultant cathode, a carbon layer is applied for the purpose of lowering conductive resistance, and a silver paste is further applied to the carbon layer, and then an outer lead wire (not shown) is soldered to the silver paste. A conductive polymer may be applied after the formation of manganese dioxide, which provides double structure. A liquid electrolyte also can be used. The aluminum electrolytic capacitor can be prepared in substantially the same manner as in the case of the tantalum electrolytic capacitor.

However, the tantalum electrolytic capacitor has a problem in that tantalum is expensive. On the other hand, in the case of the aluminum electrolytic capacitor, cost for aluminum is low. However, as shown in the partially enlarged view in Fig. 4 showing the case of an aluminum electrolytic capacitor, when a capacitor is prepared, oxygen deficiency occurs in the aluminum oxide film and the film begins to exhibit a semiconducting property, resulting in large leakage current and thus a short life of the capacitor. In addition, aluminum has a smaller dielectric constant per unit area as compared with tantalum, and hence it is difficult to make a compact type capacitor of large capacitance.

In order to solve the above-mentioned problems, attempts have been made to develop titanium electrolytic capacitors in which metal titanium is used as an anode and an oxide film such as titanium oxide or complex titanium oxide is formed thereon. In other words, since the price of titanium is lower than that of tantalum and titanium oxide has a much higher dielectric constant than tantalum oxide or aluminum oxide, the titanium electrolytic capacitor has a large potential in the development of a low-cost and large capacitance electrolytic capacitor that solves the problems of the conventional capacitors.

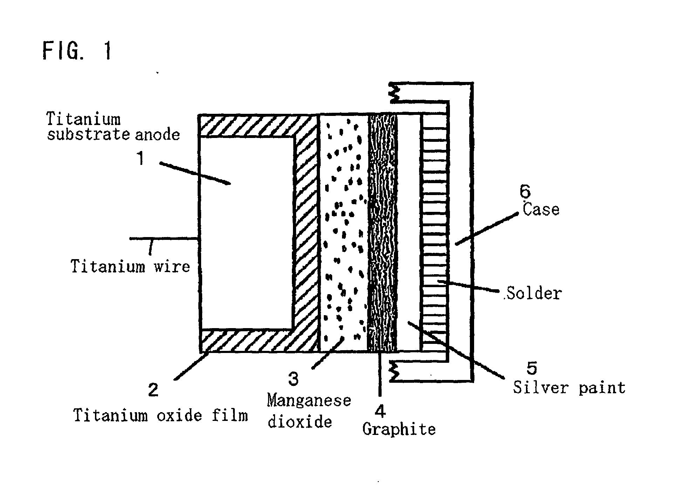

Fig. 1 shows a schematic view of a titanium electrolytic capacitor (Ta or Al powder in Fig. 4 is replaced with Ti powder; Ta or Al oxide is replaced with Ti oxide; and Ta or Al wire is replaced with Ti wire). On a titanium substrate anode 1, a titanium oxide film 2 is formed, thereby forming an anode. To the anode, a titanium wire is attached. As in Fig. 4, MnO₂ is used as a solid electrolyte 3, and a carbon layer 4 is applied thereto for the purpose of lowering conductive resistance. A silver paste 5 is further applied to the carbon layer, and the outer lead wire (not shown) is soldered to the silver paste. The resultant element is enclosed in a case 6 in order to protect the element from the ambient moisture or contamination. In order to develop such a titanium electrolytic capacitor, various attempts have been made, especially focused on improvement in a dielectric constant of the titanium oxide film as a dielectric film.

For example, Japanese Patent Application Kokai No. 6-121,275 discloses a method for producing a titanium electrolytic capacitor including: conducting anodic oxidation of a titanium metal plate in an electrolyte-containing aqueous solution at a constant voltage, terminating the anodic oxidation before the current starts to increase, conducting the anodic oxidation at 60 °C or below using an electrolyte containing an organic solvent having a water content of 60 wt % or less, thereby forming an oxide film on the titanium plate, and heat treating the film at 160 - 350 °C. Then, using the resulting titanium plate as an anode, an electrode (platinum foil) is formed on the oxide film with a solid electrode (such as manganese dioxide) or an electrolyte solution (4 wt % of ammonium phosphate, 36 wt % of water and 60 wt % of ethylene glycol) interposing therebetween. The method is characterized in that the titanium plate having the oxide film is obtained by subjecting the titanium plate to anodic oxidation in the aqueous solution and subjecting the plate having the oxide film further to anodic oxidation in the electrolyte containing an organic solvent having a water content of 60 wt % or less.

Japanese Patent Application Kokai No. 9-17,684 discloses a capacitor having: a porous sintered body composed of metal mainly comprising titanium; a dielectric film formed on the sintered body, mainly comprising perovskite-type complex oxide, such as strontium titanate; an electrode comprising conductor or semiconductor formed on the surface of the dielectric film; and an opposed electrode (a graphite layer and a silver electrode layer) which is in electric contact with the conductor or semiconductor electrode and is opposed to the sintered body, wherein the conductor or semiconductor has a double layered structure of metal (such as manganese and nickel) oxide and a conductive macromolecular compound (polypyrrole). According to the disclosure, since the electrode comprising conductor or semiconductor is formed on the dielectric film, large electrostatic capacitance can be attained without enlarging whole capacitor.

Further, Japanese Patent Application Kokai No. 2000-77,274 discloses a capacitor and a method for producing the same. In this disclosure, a porous sintered body composed of metal mainly comprising titanium is subjected to heat treatment in an alkaline aqueous solution containing A ions (A is at least one member selected from Ba, Sr and Pb) and B ions (B is at least one member selected from Zr and Ti), thereby forming an ABO₃ film on the surface of the porous sintered body; the porous sintered body having the ABO3 film thereon is subjected to heat treatment in an alkaline aqueous solution containing C ions (C is at least one member selected from Ba and Sr) and Pb ions, thereby forming a conductive CPbO₃ film as an opposed electrode; and then a graphite layer and a silver electrode layer are applied, thereby obtaining a capacitor. According to the disclosure, a compact type capacitor having large electrostatic capacitance can be easily produced.

### [Problem to be solved by the invention]

In the above-mentioned prior art, the dielectric constant of dielectric film is improved, and large capacitance capacitors have been produced. Though the titanium oxide films on the surface of metal titanium formed by the above-mentioned conventional methods have a high dielectric constant, they exhibit poor denseness and poor stability, and thus when used as a capacitor, leakage current is extremely large, which is not suited for practical use.

Therefore, the object of the present invention is to develop a method for forming an oxide film that has a large dielectric constant and is stable, on the surface of a metal titanium substrate. Thus, the object of the present invention is, by utilizing such an oxide film, to provide a titanium electrolytic capacitor which is compact, has a large capacitance, has a small leakage current, and has a long life.

### [Means to solve the problem]

The present inventors have conducted intensive and extensive studies with the view to solving the above-mentioned problems and focusing on the method for forming an oxide film mainly comprising titanium oxide, on the surface of the metal titanium substrate and have reached a new method (re-oxidation method), and found a method for forming a stable oxide film having a high dielectric constant and a small leakage current, thereby completed the invention. Specifically, it has been found that a remarkably dense oxide film can be obtained by forming an oxide film using re-oxidation method in which a metal titanium substrate having an oxide film on the surface thereof is subjected to calcination in vacuum or an inert gas atmosphere, thereby reducing the thickness of the oxide film or removing most of the film to return the surface of titanium to substantially metal only; and then the surface of the metal titanium is subjected to oxidation again, thereby forming an oxide film. It was also found that the change of the oxidation may be defined by the thickness of the oxide film of a border value of 50 nm.

In the present invention, the thickness of oxide film is determined by measuring oxygen concentration near the surface of the titanium plate by the Auger electron spectroscopy, and deriving the thickness from the oxygen concentration. For the measurement by the Auger electron spectroscopy, type PHI-680 device (manufactured by PHISICAL ELECTRONICS) was used. With respect to the electron gun, an acceleration voltage of 5 kV and a sample current of approximately 10 nA were used. With respect to the ion gun, Ar+ was selected as an ion species, a beam voltage of 5 kV and a spattering rate of approximately 43 nm/min were used, and the measured area of the specimen was approximately 3 µm².

Based on the findings above, the method for forming an oxide film of the present invention is characterized in that a metal titanium substrate having on the surface thereof an oxide film having a thickness of 50 nm or more is subjected to calcination in vacuum or in an inert gas atmosphere, thereby reducing the thickness of the oxide film to less than 50 nm; and then calcined surface of the metal titanium substrate is subjected to oxidization, thereby re-forming an oxide film on the surface of the metal titanium substrate. It is preferred that the calcination be conducted at 500 - 900 °C, and that the oxidation be conducted by anodic oxidation or by heat treatment in oxygen or an oxygen-containing atmosphere.

The present invention also provides a titanium electrolytic capacitor wherein a metal titanium substrate, having the oxide film obtained by the above-mentioned method, is used as an anode.

Another method for forming an oxide film of the present invention is characterized in that, titanic acid or an organic titanium compound is applied on the surface of the metal titanium substrate, thereby forming an oxide film; the metal titanium substrate having the oxide film is subjected to calcination; and then subjected to anodic oxidation in an electrolyte-containing solution, thereby re-forming an oxide film on the surface of the metal titanium substrate. The present invention also provides a titanium electrolytic capacitor wherein a metal titanium substrate, having an oxide film formed by the above-mentioned method, is used as an anode.

In the present invention, the phrase "oxide film" means not only a titanium oxide film, but also a film of complex of titanium oxide, for example, a complex containing other element including strontium and barium, such as strontium titanate and barium titanate.

### [Modes of carrying out the invention]

As already described with reference to Fig. 1, the titanium oxide film 2 is formed on the titanium anode substrate 1, which constitutes an anode structure. To the anode, a titanium wire is attached. MnO₂ is presented as one embodiment of the solid electrolyte 3, and onto the electrolyte, a carbon layer 4 is applied for the purpose of lowering conductive resistance. The silver paste 5 is further applied, and the outer lead wire (not shown) is soldered thereto, thereby forming cathode structure. The resultant element is enclosed in the case 6 in order to protect it from the ambient moisture and contamination.

The metal titanium substrate to be used in the present invention is a porous sintered body obtained from sintering a metal titanium plate or a metal titanium powder. In general, for the production of a titanium electrolytic capacitor, a porous sintered body obtained from the latter calcined metal titanium powder is used as an anode. In producing the porous sintered body, an embrittled titanium hydride powder can be used as a starting material, instead of metal titanium powder. When such titanium hydride powder is used, it is subjected to heat treatment under a reduced pressure and dehydrogenation treatment, before, during and after the calcination.

When a metal titanium powder is used for preparing the above-mentioned porous sintered body, such metal titanium powder generally contains particles of diameters of 1 - 150 µm and an average particle diameter of 5 - 100 µm. With respect to the method for preparing the porous sintered body, conventional methods can be used, however, it is necessary that, firstly, the titanium powder be subjected to pressure forming with a press molder. If necessary, a binder such as styrene resin, acrylic resin and camphor is added to the titanium powder during this process. The thus obtained substance is subjected to calcination in vacuum at 600 - 900 °C. When the resultant porous sintered body is used for a capacitor, a titanium wire is attached thereto during the pressure forming or after the calcination. In order to obtain large electrostatic capacitance in the resultant capacitor, it is necessary to make the specific surface of the sintered body as large as possible. Specifically stated, it is preferred that the porous sintered body be made so that the sintering density (the ratio of the density of porous sintered body to the absolute specific gravity of metal titanium) thereof is in the range of 30 - 70 %. When the sintering density is too high, the specific surface is small. When the sintering density is too low, the specific surface is large but the strength of the porous sintered body becomes poor, and therefore such porous sintered body is not suitable for a capacitor.

The present invention will be explained by following the procedure of the method.

### A. A metal titanium substrate having an oxide film:

The metal titanium substrate used in the present invention has an oxide film having a thickness of at least 50 nm, preferably 50 - 500 nm, more preferably 100 - 200 nm, on the surface of the substrate. In the present invention, the oxide film includes not only a titanium oxide film, but also a film of complex of titanium oxide, for example, a complex containing other element including strontium and barium, such as strontium titanate and barium titanate.

The oxide film can be produced by various methods. Examples include (i) heat treatment in the presence of oxygen, (ii) treatment of the surface of metal titanium with titanic acid or an organic titanium compound, (iii) treatment of the surface with titanium tetrachloride, and (iv) electrochemical treatment.

In the case of (i) heat treatment in the presence of oxygen, it is preferred that the treatment temperature be 500 - 900 °C, and the oxygen content be 20 - 100 %.

In the case of (ii) treatment with titanic acid and an organic titanium compound, examples of titanic acid include orthotitanic acid, metatitanic acid and peroxotitanic acid. Among them, peroxotitanic acid that can be used in neutral pH range when used as an aqueous solution is preferred.

Peroxotitanic acid is also called as peroxititanic acid or titanium peroxide, and the formula thereof is represented by H₄TiO₅, Ti(OOH)(OH)₃ or TiO₃ • 2H₂O. In general, peroxotitanic acid is handled as a viscous aqueous solution (sol solution) having yellow, camel, or reddish-brown transparent color, and is commercially available. Examples of the commercial products include "PTA-85", "PTA-170" (both are aqueous solutions of PTA manufactured by Tanaka Tensha Co.,). Peroxotitanic acid can be prepared by conventional methods. For example, an aqueous solution of titanium tetrachloride is hydrolyzed with ammonia water, thereby obtaining slurry containing titanium hydroxide. After washing the slurry, hydrogen peroxide is added, thereby obtaining an aqueous solution of peroxititanic acid.

As an organic titanium compound, alkoxy titanium is preferred, and examples include tetra n-propoxy titanium, tetraisopropoxy titanium, tetra n-butoxy titanium and tetraisobutoxy titanium. These organic titanium compounds containing alkoxy titanium are generally used as a solution in which alcohol, such as isopropyl alcohol, ether or hydrocarbon is used as a solvent.

With respect to the method for applying titanic acid or an organic titanium compound, there may be mentioned a method in which the metal titanium substrate is immersed in an aqueous solution of titanic acid or a solution of an organic titanium compound (dip-coat method), or a method in which an aqueous solution of titanic acid or a solution of an organic titanium compound is sprayed onto the metal titanium substrate. After the applied layer is dried, it is preferred that the application be repeated several times, in order to form a uniform oxide film on the surface of the metal titanium substrate. Upon application, if bubbles stay on the surface of the metal titanium substrate, a uniform oxide film cannot be obtained. In order to avoid this, an aqueous solution of titanic acid or a solution of an organic titanium compound applied to the surface of the metal titanium substrate is subjected to defoaming treatment in vacuum.

In the case of (iii) treatment of the surface with titanium tetrachloride, the metal titanium substrate is immersed in an aqueous solution of titanium tetrachloride. Subsequently, titanium tetrachloride is hydrolyzed while adjusting pH of the aqueous solution at about 2.0 by adding sodium hydroxide, and hydroxide of titanium is deposited on the surface of the metal titanium substrate. After that, the metal titanium substrate is taken out, and subjected to calcination at 500 - 900 °C in the atmosphere, thereby forming a titanium oxide film.

In (iv) electrochemical treatment, anodic oxidation is conducted in various electrolyte-containing aqueous solutions. The electrolyte to be used can be ones well-known in the art, and examples include, for an aqueous solution, phosphoric acid, alkali metal salt or ammonium salt of adipic acid, boric acid, phthalic acid, maleic acid, benzoic acid and citric acid, and sulfuric acid; for nonaqueous solution, ammonium borate, sodium acetate, and an ethylene glycol solution of phosphoric acid; and for fused salt, NaNO₃ and KNO₃. In the method for anodic oxidation, the metal titanium substrate is used as an anode, and in the above-mentioned electrolyte-containing solution, voltage is applied to the anode thereby conducting anodic oxidation. The applied voltage is 10 - 50 V, preferably 20 - 40 V. The period for voltage-application is 1 - 30 minutes, preferably 1 - 10 minutes. For the temperature, room temperature is selected. After the anodic oxidation, the surface of the substrate is washed well with water and dried, thereby obtaining a metal titanium substrate having an oxide film thereon.

Especially when a titanium plate is used as a metal titanium substrate, prior to the above-mentioned treatment, it is desired to remove dirt on the surface of the metal titanium substrate and to conduct surface treatment for increasing the specific surface of the substrate. Specifically, the surface is treated with an acid, such as hydrogen fluoride, or other oxidant.

### B. Calcination (annealing) treatment

The metal titanium substrate having the oxide film mentioned above is subjected to calcination in vacuum or an inert gas (such as argon gas) atmosphere, thereby reducing the thickness of the oxide film to less than 50 nm. Calcination is conducted at 500 - 900 °C, preferably 550 - 750 °C, for 10 minutes - 5 hours, preferably 30 minutes - 3 hours. When calcination is conducted in vacuum, the degree of vacuum is 1 x 10⁻² Pa - 1 x 10⁻⁴ Pa. The thickness of the oxide film after the calcination is preferably 10 nm or less, more preferably 5 nm - 0 nm. Complete removal of the oxide film is especially preferred. By subjecting the oxide film formed on the surface of the metal titanium substrate to calcination, the oxygen component in the oxide film is diffused and permeated in metal titanium. In general, after the formation of the oxide film, there is a gradient in the oxygen content from the surface to the inside of the metal titanium substrate (the oxygen content decreases in the direction from the surface to the inside of the metal titanium). On the other hand, in the present invention, it is preferred that the surface of the metal titanium after the above calcination process have a reduced oxygen content, and no gradient in the oxygen content be present near the surface.

### C. Re-oxidation:

Subsequently, the surface of the metal titanium substrate is subjected to oxidation, thereby re-forming an oxide film. It is preferred that the oxide film having a thickness of 50 nm or more be formed. Examples of the method for re-oxidation include (a) calcination in oxygen or an oxygen-containing atmosphere, and (b) electrochemical treatment.

In the case of (a) calcination in the presence of oxygen, the process is conducted at 500 · 800 °C, preferably 550 · 750 °C for 10 minutes - 5 hours, preferably 30 minutes - 3 hours. The oxygen content is generally 20 - 100 % and atmospheric oxygen can be used.

With respect to (b) electrochemical treatment, there can be mentioned a method in which anodic oxidation is conducted in an electrolyte-containing aqueous solution mentioned above. The electrolyte to be used can be ones well-known in the art, and examples include, for an aqueous solution, phosphoric acid, alkali metal salt or ammonium salt of adipic acid, boric acid, phthalic acid, maleic acid, benzoic acid and citric acid, and sulfuric acid; for nonaqueous solutino, ammonium borate, sodium acetate, and an ethylene glycol solution of phosphoric acid; and for fused salt, NaNO₃, KNO₃.

In the method for anodic oxidation, the metal titanium substrate that had been subjected to the above-mentioned calcination treatment is used as an anode, and in the above-mentioned electrolyte-containing solution, voltage is applied to the anode thereby conducting anodic oxidation. The applied voltage is 5 - 600 V, preferably 10-50 V, especially preferably 20 - 40 V, and the period of application is 1 minute 10 hours, preferably 1 - 30 minutes, especially preferably 1 - 10 minutes. For the temperature, room temperature is selected. After the anodic oxidation, the surface of the substrate is washed well with water and dried, thereby obtaining a metal titanium substrate having an oxide film thereon.

The above-mentioned methods can be used in combination.

The followings are preferred embodiments of the treatment:
(1) a method for forming an oxide film on a metal titanium substrate wherein: titanic acid or an organic titanium compound is applied to the surface of the metal titanium substrate, thereby forming an oxide film on the surface; the metal titanium substrate having the oxide film is subjected to calcination in vacuum, thereby reducing the thickness of the oxide film; and the resulting substrate is subjected to anodic oxidation in an electrolyte-containing solution, thereby re-forming an oxide film on the surface of the metal titanium substrate;
(2) a method for forming an oxide film on a metal titanium substrate wherein: the metal titanium substrate is subjected to heat treatment in the presence of oxygen, thereby forming an oxide film on the surface; the metal titanium substrate having the oxide film is subjected to calcination in vacuum, thereby reducing the thickness of the oxide film; and the resulting substrate is subjected to anodic oxidation in an electrolyte-containing solution, thereby re-forming an oxide film on the surface of the metal titanium substrate;
(3) a method for forming an oxide film on a metal titanium substrate wherein: titanic acid or an organic titanium compound is applied to the surface of the metal titanium substrate, thereby forming an oxide film on the surface; the metal titanium substrate having the oxide film is subjected to calcination in vacuum, thereby reducing the thickness of the oxide film; the resultant substrate is subjected to heat treatment in the presence of oxygen; and the resulting substrate is subjected to anodic oxidation in an electrolyte-containing solution, thereby re-forming an oxide film on the surface of the metal titanium substrate.

### D. Calcination - re-oxidation mechanism:

As shown above, when the surface of the metal titanium substrate having the oxide film of some thickness is subjected to calcination in vacuum or an inert gas atmosphere, so that oxygen in the oxide film is dispersed in the metal titanium, and then oxidation is further conducted, the resultant oxide film is uniform and strong. A solid electrolytic capacitor using the oxide film exhibits a high dielectric constant, and small leakage current.

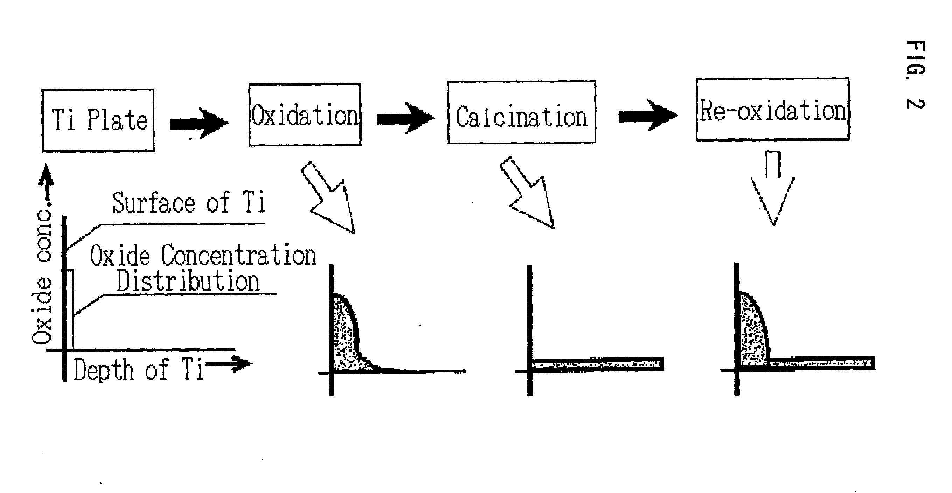

Fig. 2 shows the transition of the oxygen content between the surface and the inside of Ti plate that underwent oxidation, calcination and re-oxidation. The oxygen content was measured by Auger analysis. When the oxide film is formed, a gradient in the oxygen content from the surface to the inside of the metal titanium substrate is observed (the oxygen content decreases in the direction from the surface to the inside of the metal titanium), while the surface of the metal titanium after calcination shows a reduced oxygen content, and no gradient in the oxygen content is present near the surface.

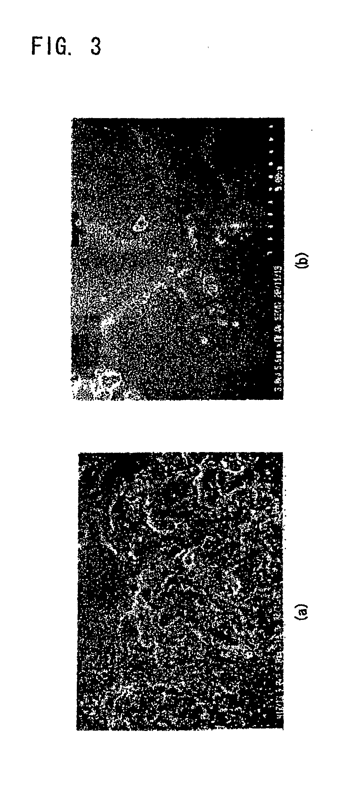

In Fig. 3, (a) shows an oxide film on the surface of the Ti plate after oxidation. (b) shows the surface of Ti plate after calcination. It is apparent that the oxide film is removed. In this case, the oxygen component of the oxide film is dispersed and permeated into titanium. By conducting re-oxidation, a uniform, strong and dense oxide film is formed, with unelucidated mechanism (the oxygen permeated into titanium may have effect on the film, or the surface condition of the substrate may be improved by re-oxidation. However, the present invention should not be limited by these hypotheses).

With respect to a 30 V anodic oxidation film obtained by the conventional method and a 30 V anodic oxidation film obtained by re-oxidation method, reflected electron images of cross section of the oxidation film were obtained and compared. As a result, the 30 V anodic oxidation film obtained by the conventional method had an eminent hetero-phase (presumably carbon) in the interface between the film and the substrate, and the film obtained by re-oxidation method was thicker.

The metal titanium substrate having such dense oxide film can be used not only in an electrolytic capacitor, but also in, for example, a metal titanium material having photocatalytic function on the surface thereof.

### E. electrolytic capacitor:

The metal titanium substrate having the oxide film obtained as described above can be used as an anode for a solid electrolytic capacitor. The cathode can be obtained in substantially the same manner as in the tantalum electrolytic capacitor, by subjecting a manganese compound (such as manganese sulfate) to heat treatment on the oxide film, thereby obtaining manganese oxide as a cathode; by immersing a porous sintered body in an aqueous solution of manganese nitrate, and subjecting the resultant body to thermal decomposition in an electric furnace, thereby obtaining manganese dioxide, which procedure is repeated thereby allowing the manganese dioxide layer to grow; or by using a conductive macromolecular compound as a cathode. On the cathode, a carbon layer is applied for lowering conductive resistance, and silver paste is further applied to the carbon layer, and an outer lead wire (not shown) is soldered to the silver paste. A conductive polymer may be applied after the formation of manganese dioxide, which provides double structure. A liquid electrolyte also can be used. Various conventional cathode structures as mentioned above can be used, including those for a solid electrolyte and a liquid electrolyte.

Followings are embodiments of preferred capacitor:
(1) a titanium electrolytic capacitor wherein an anode is a metal titanium substrate having a re-formed oxide film obtained by: applying titanic acid or an organic titanium compound to the surface of the metal titanium substrate, thereby forming an oxide film; subjecting the metal titanium substrate having the oxide film to calcination in vacuum, thereby reducing the thickness of the oxide film; and subjecting the substrate to anodic oxidation in an electrolyte-containing solution, thereby re-forming the oxide film.
(2) a titanium electrolytic capacitor wherein an anode is a metal titanium substrate having a re-formed oxide film obtained by: subjecting the metal titanium substrate to heat treatment in the presence of oxygen, thereby forming an oxide film; subjecting the substrate to calcination in vacuum, thereby reducing the thickness of the oxide film; and subjecting the substrate to anodic oxidation in an electrolyte-containing solution, thereby re-forming the oxide film.
(3) a titanium electrolytic capacitor wherein an anode is a metal titanium substrate having a re-formed oxide film obtained by: applying titanic acid or an organic titanium compound to the surface of the metal titanium substrate, thereby forming an oxide film; subjecting the substrate to calcination in vacuum, thereby reducing the thickness of the oxide film; subjecting the substrate to heat treatment in the presence of oxygen; and subjecting the substrate to anodic oxidation in an electrolyte-containing solution, thereby re-forming the oxide film.

There are several methods for producing a metal titanium substrate having an oxide film mentioned in the item A above, and among them, in the case of (ii) treatment of the surface of metal titanium with titanic acid or an organic titanium compound (dip-coat method), calcination (annealing) treatment in vacuum or an inert gas atmosphere for the purpose of reducing the thickness of the oxide film to less than 50 nm is not requisite. Instead, the final product having a dense oxide film can be obtained by subjecting the substrate to calcination in oxygen or an oxygen-containing atmosphere and then to anodic oxidation. This process is conducted at 500 - 900 °C, preferably 550 - 750 °C for 10 minutes - 5 hours, preferably 30 minutes - 3 hours. The oxygen content is generally 20 - 100 % and atmospheric oxygen can be used. In addition, the metal titanium substrate having the oxide film obtained as described above can be used as an anode for a solid electrolytic capacitor. The following is an embodiment of preferred capacitor: a titanium electrolytic capacitor wherein an anode is a metal titanium substrate having a re-formed oxide film obtained by applying titanic acid or an organic titanium compound to the surface of the metal titanium substrate, thereby forming an oxide film, subjecting the metal titanium substrate having the oxide film to calcination in oxygen, and subjecting the substrate to anodic oxidation in an electrolyte-containing solution, thereby re-forming the oxide film.

### [Examples]

The effect of the present invention will be explained with reference to the following Examples and Comparative Examples.

In the following Examples and Comparative Examples, evaluation of insulation property of an oxide film and measurement of capacitance were determined in the following manner.

### 1) Evaluation of insulation property (measurement of leakage current)

A specimen of the titanium plate was masked with an insulating tape, and the electrode area of approximately 1 cm² was remained uncovered. This area is used as a cathode. As the opposite electrode (anode), a Pt plate (50 mm x 50 mm) in a form of mesh was used, and as an electrolyte, an aqueous solution of ammonium adipate (150 g/L) was used. Current between the cathode and the anode (leakage current) was measured, one minute after the application of voltage (5 V, 10 V, 15 V, 20 V or 30 V). The value of leakage current may vary depending on the order of voltage application, and therefore, the measurement was made from lower voltage side. It is noted that, when bubbles are formed on the surface of the electrode, the voltage should be tuned off and the liquid should be stirred well until all bubbles are disappeared.

### 2) Measurement of capacitance

A test sample used for measurement of leakage current is used as a cathode, and a titanium plate (20 mm x 100 mm) was used as the opposite electrode. Using the following conditions, the capacitance of the film was directly measured with a LCR (inductance • capacitance • resistance) meter.

### • Measurement conditions

Electrolytic solution: an aqueous solution of ammonium adipate (150 g/L)
Frequency: 120 Hz
Amplitude: 1 V
(Note) in this measurement method, capacitance values of opposing electrodes are directly added. However, the capacitance of the Ti plate is large enough to ignore as compared with the capacitance of the test electrode (the total capacitance is represented by the formula: 1/total capacitance = 1/test sample capacitance + 1/Ti plate capacitance. Therefore, when the capacitance of the Ti plate is remarkably larger than that of the specimen, the latter can be ignored).

### [Example 1]

A metal titanium plate was heated in oxygen at 700 °C for 2 hours, thereby obtaining an oxide film having a thickness of 400 nm. Subsequently, the plate was subjected to calcination in vacuum of approximately 1 x 10⁻³ Pa at 800 °C for 2 hours, thereby removing the oxide film. The metal titanium plate was used as an electrode, and a voltage of 30 V was applied in an aqueous solution of ammonium adipate (150 g/L) for 5 minutes, thereby obtaining an oxide film. With respect to the resultant oxide film, evaluation of insulation property and measurement of capacitance were made. The results are shown in Table 1.

### [Example 2]

Substantially the same procedure as in Example 1 was repeated except that a metal titanium plate was heated in oxygen at 600 °C for 2 hours, thereby obtaining an oxide film having a thickness of 100 nm. With respect to the resultant oxide film, evaluation of insulation property and measurement of capacitance were made. The results are shown in Table 1.

### [Example 3]

Substantially the same procedure as in Example 1 was repeated except that a metal titanium plate having an oxide film having a thickness of 400 nm was heated in vacuum at 800 °C for 4 hours, thereby obtaining an oxide film. With respect to the resultant oxide film, evaluation of insulation property and measurement of capacitance were made. The results are shown in Table 1.

### [Example 4]

A metal titanium plate was heated in oxygen at 600 °C for 2 hours, thereby obtaining an oxide film having a thickness of 100 nm. Subsequently, the plate was subjected to calcination in vacuum of approximately 1 x 10⁻³ Pa at 700 °C for 2 hours, thereby removing the oxide film. The metal titanium plate was used as an electrode, and a voltage of 30 V was applied in an aqueous solution of ammonium adipate (150 g/L) for 5 minutes, thereby obtaining an oxide film. With respect to the resultant oxide film, evaluation of insulation property and measurement of capacitance were made. The results are shown in Table 1.

### [Example 5]

A metal titanium plate was immersed in an aqueous solution of peroxotitanic acid (1.7 wt %), and while immersing, vacuum defoaming (defoaming under reduced pressure) was conducted, thereby completely removing bubbles from the surface of the metal titanium. The plate was pulled out at the rate of 35 mm/min, and was dried in a drier at 80 °C for 10 minutes. Subsequently, the metal titanium plate was immersed in an aqueous solution of peroxotitanic acid (1.7 wt %) for 1 minute. The plate was pulled out at the rate of 105 mm/min, thereby applying peroxotitanic acid, and was dried in a drier at 80 °C for 10 minutes. This procedure was repeated 20 times, thereby obtaining a titanium oxide film having a thickness of approximately 0.46 µm on the surface of the metal titanium plate. Subsequently, the metal titanium plate having the titanium oxide film was subjected to calcination in vacuum of approximately 1 x 10⁻³ Pa at 600 °C for 2 hours, thereby removing the oxide film. The plate was further heated in oxygen at 700 °C for 2 hours. The metal titanium plate was used as an electrode, and a voltage of 30 V was applied in an aqueous solution of ammonium adipate (150 g/L) for 5 minutes, thereby obtaining an oxide film. With respect to the resultant oxide film, evaluation of insulation property and measurement of capacitance were made. The results are shown in Table 1.

### [Example 6]

A metal titanium plate was immersed in an aqueous solution of peroxotitanic acid (1.7 wt %), and while immersing, vacuum defoaming (defoaming under reduced pressure) was conducted, thereby completely removing bubbles from the surface of the metal titanium. The plate was pulled out at the rate of 35 mm/min, and was dried in a drier at 80 °C for 10 minutes. Subsequently, the metal titanium plate was immersed in an aqueous solution of peroxotitanic acid (1.7 wt %) for 1 minute. The plate was pulled out at the rate of 105 mm/min, thereby applying peroxotitanic acid, and was dried in a drier at 80 °C for 10 minutes. This procedure was repeated 10 times, thereby obtaining a titanium oxide film having a thickness of approximately 0.16 µm on the surface of the metal titanium plate. Subsequently, the metal titanium plate having the titanium oxide film was subjected to calcination in vacuum of approximately 1 x 10⁻³ Pa at 600 °C for 2 hours, thereby removing the oxide film. The plate was further subjected to calcination in oxygen at 700 °C for 2 hours. The metal titanium plate was used as an electrode, and a voltage of 30 V was applied in an aqueous solution of ammonium adipate (150 g/L) for 5 minutes, thereby obtaining an oxide film. With respect to the resultant oxide film, evaluation of insulation property and measurement of capacitance were made. The results are shown in Table 1.

### [Example 7]

A metal titanium plate was subjected to HF treatment (immersing in a solution containing HF : H₂O₂: H₂O = 1.5:1.5: 7 for 1 minute and washing with water). The plate was immersed in an aqueous solution of peroxotitanic acid (1.7 wt %), and while immersing, vacuum defoaming (defoaming under reduced pressure) was conducted, thereby completely removing bubbles from the surface of the metal titanium. The plate was pulled out at the rate of 35 mm/min, and was dried in a drier at 80 °C for 10 minutes. Subsequently, the metal titanium plate was immersed in an aqueous solution of peroxotitanic acid (1.7 wt %) for 1 minute. The plate was pulled out at the rate of 105 mm/min, thereby applying peroxotitanic acid, and was dried in a drier at 80 °C for 10 minutes. This procedure was repeated 10 times, thereby obtaining a titanium oxide film having a thickness of approximately 0.17 µm on the surface of the metal titanium plate. Subsequently, the metal titanium plate having the titanium oxide film was subjected to calcination in vacuum of approximately 1 x 10⁻³ Pa at 700 °C for 2 hours, thereby removing the oxide film. The plate was further subjected to calcination in oxygen at 700 °C for 2 hours. The metal titanium plate was used as an electrode, and a voltage of 30 V was applied in an aqueous solution of ammonium adipate (150 g/L) for 5 minutes, thereby obtaining an oxide film. With respect to the resultant oxide film, evaluation of insulation property and measurement of capacitance were made. The results are shown in Table 1.

### [Example 8]

A metal titanium plate was subjected to calcination in oxygen at 600 °C for 2 hours, thereby obtaining an oxide film. Subsequently, the metal titanium plate having the oxide film was subjected to calcination in vacuum of approximately 3 x 10⁻⁴ Pa at 800 °C for 2 hours, thereby removing the oxide film. The metal titanium plate was used as an electrode, and a voltage of 30 V was applied in an aqueous solution of phosphoric acid (1 wt %) for 5 minutes, thereby obtaining an oxide film. The plate was dried in vacuum at 90 °C for 5 hours. With respect to the resultant oxide film, evaluation of insulation property and measurement of capacitance were made. The results are shown in Table 1.

### [Example 9]

A metal titanium plate was subjected to calcination in oxygen at 700 °C for 2 hours, thereby obtaining an oxide film. Subsequently, the metal titanium plate having the oxide film was subjected to calcination in vacuum of approximately 3 x 10⁻⁴ Pa at 850 °C for 2 hours, thereby removing the oxide film. The metal titanium plate was used as an electrode, and a voltage of 30 V was applied in an aqueous solution of phosphoric acid (1 wt %) for 5 minutes, thereby obtaining an oxide film. The plate was dried in vacuum at 90 °C for 5 hours. With respect to the resultant oxide film, evaluation of insulation property and measurement of capacitance were made. The results are shown in Table 1.

### [Example 10]

The metal titanium plate was immersed in an aqueous solution of peroxotitanic acid (1.7 wt %) for 1 minute. The plate was pulled out at the rate of 105 mm/min, thereby applying peroxotitanic acid, and was dried in a drier at 80 °C for 10 minutes. This procedure was repeated 15 times, thereby obtaining a titanium oxide film having a thickness of approximately 0.29 µm on the surface of the metal titanium plate. Subsequently, the metal titanium plate having the titanium oxide film was subjected to calcination in oxygen at 700 °C for 2 hours. The metal titanium plate was used as an electrode, and a voltage of 30 V was applied in an aqueous solution of ammonium adipate (150 g/L) for 5 minutes, thereby obtaining an oxide film. With respect to the resultant oxide film, evaluation of insulation property and measurement of capacitance were made. The results are shown in Table 1.

### [Example 11]

Substantially the same procedure as in Example 8 was repeated except that a metal titanium plate having titanium oxide film was subjected to calcination in oxygen at 600 °C thereby obtaining an oxide film. With respect to the resultant oxide film, evaluation of insulation property and measurement of capacitance were made. The results are shown in Table 1.

### [Example 12]

A metal titanium plate was immersed in an aqueous solution of peroxotitanic acid (1.7 wt %) for 1 minute, and while immersing, vacuum defoaming (defoaming under reduced pressure) was conducted, thereby completely removing bubbles from the surface of the metal titanium. The plate was pulled out at the rate of 105 mm/min, thereby applying peroxotitanic acid, and was dried in a drier at 80 °C for 10 minutes. Subsequently, the metal titanium plate was further immersed in an aqueous solution of peroxotitanic acid (1.7 wt %) for 1 minute. The plate was pulled out at the rate of 105 mm/min, thereby applying peroxotitanic acid, and was dried in a drier at 80 °C for 10 minutes. This procedure was repeated 10 times, thereby obtaining a titanium oxide film having a thickness of approximately 0.15 µm on the surface of the metal titanium plate. Subsequently, the metal titanium plate having the titanium oxide film was subjected to calcination in oxygen at 700 °C for 2 hours. The metal titanium plate was used as an electrode, and a voltage of 30 V was applied in an aqueous solution of ammonium adipate (150 g/L) for 5 minutes, thereby obtaining an oxide film. With respect to the resultant oxide film, evaluation of insulation property and measurement of capacitance were made. The results are shown in Table 1.

### [Example 13]

Substantially the same procedure as in Example 10 was repeated except that the application step with peroxotitanic acid was repeated 20 times thereby obtaining a titanium oxide film having a thickness of approximately 0.46 µm. With respect to the resultant oxide film, evaluation of insulation property and measurement of capacitance were made. The results are shown in Table 1.

### [Example 14]

A metal titanium plate was immersed for 1 minute in a solution that had been prepared by hydrolyzing titanium tetraisopropoxide in isopropanol. The plate was pulled out at the rate of 105 mm/min, thereby applying peroxotitanic acid, and was dried in a drier at 120 °C for 10 minutes. This procedure was repeated 20 times, thereby obtaining a titanium oxide film having a thickness of approximately 0.30 µm on the surface of the metal titanium plate. Subsequently, the metal titanium plate having the titanium oxide film was subjected to calcination in oxygen at 700 °C for 2 hours. The metal titanium plate was used as an electrode, and a voltage of 30 V was applied in an aqueous solution of ammonium adipate (150 g/L) for 5 minutes, thereby obtaining an oxide film. With respect to the resultant oxide film, evaluation of insulation property and measurement of capacitance were made. The results are shown in Table 1.

### [Example 15]

A metal titanium plate was immersed in an aqueous solution of peroxotitanic acid (1.7 wt %) for 1 minute, and while immersing, vacuum defoaming (defoaming under reduced pressure) was conducted, thereby completely removing bubbles from the surface of the metal titanium. The plate was pulled out at the rate of 105 mm/min, thereby applying peroxotitanic acid, and was dried in a drier at 80 °C for 10 minutes. Subsequently, the metal titanium plate was further immersed in an aqueous solution of peroxotitanic acid (1.7 wt %) for 1 minute. The plate was pulled out at the rate of 210 mm/min, thereby applying peroxotitanic acid, and was dried in a drier at 80 °C for 10 minutes. This procedure was repeated 15 times, thereby obtaining a titanium oxide film having a thickness of approximately 0.39 µm on the surface of the metal titanium plate. Subsequently, the metal titanium plate having the titanium oxide film was subjected to calcination in vacuum at 700 °C for 2 hours. The metal titanium plate was used as an electrode, and a voltage of 30 V was applied in an aqueous solution of ammonium adipate (150 g/L) for 5 minutes, thereby obtaining an oxide film. With respect to the resultant oxide film, evaluation of insulation property and measurement of capacitance were made. The results are shown in Table 1.

### [Comparative Example 1]

A metal titanium plate was used as an electrode, and a voltage of 30 V was applied in an aqueous solution of ammonium adipate (150 g/L) for 5 minutes, thereby obtaining an oxide film. With respect to the resultant oxide film, evaluation of insulation property and measurement of capacitance were made. The results are shown in Table 1.

### [Comparative Example 2]

Substantially the same procedure as in Comparative Example 1 was repeated except that the voltage was changed to 50 V, thereby obtaining an oxide film. With respect to the resultant oxide film, evaluation of insulation property and measurement of capacitance were made. The results are shown in Table 1.

### [Comparative Example 3]

A metal titanium plate was subjected to calcination in the atmosphere at 700 °C for 2 hours, thereby obtaining an oxide film. With respect to the resultant oxide film, evaluation of insulation property and measurement of capacitance were made. The results are shown in Table 1.

### [Comparative Example 4]

Substantially the same procedure as in Example 1 was repeated except that calcination was not conducted in vacuum, thereby obtaining an oxide film. With respect to the resultant oxide film, evaluation of insulation property and measurement of capacitance were made. The results are shown in Table 1.

### [Comparative Example 5]

A metal titanium plate was subjected to calcination in the atmosphere at 800 °C for 2 hours, thereby obtaining an oxide film. With respect to the resultant oxide film, evaluation of insulation property and measurement of capacitance were made. The results are shown in Table 1.

### [Comparative Example 6]

A metal titanium plate was subjected to calcination in the atmosphere at 900 °C for 2 hours, thereby obtaining an oxide film. With respect to the resultant oxide film, evaluation of insulation property and measurement of capacitance were made. The results are shown in Table 1.

**[Table 1]**

| | insulation property evaluation (leakage current) (applied voltage = 15 V) [µA] | Capacitance [nF] |
|---|---|---|
| Example 1 | 55.0 | 979 |
| Example 2 | 60.0 | 1,190 |
| Example 3 | 49.8 | 2,027 |
| Example 4 | 73.0 | 2,260 |
| Example 5 | 18.7 | 1,090 |
| Example 6 | 5.9 | 671 |
| Example 7 | 6.4 | 700 |
| Example 8 | 0.69 | 389 |
| Example 9 | 0.80 | 398 |
| Example 10 | 8.0 | 298 |
| Example 11 | 53.0 | 745 |
| Example 12 | 10.8 | 519 |
| Example 13 | 9.0 | 902 |
| Example 14 | 9.0 | 645 |
| Example 15 | 16.9 | 758 |
| Comparative Example 1 | 1,482.0 | 1,521 |
| Comparative Example 2 | 1,258.0 | 723 |
| Comparative Example 3 | 29.0 | 198 |
| Comparative Example 4 | 225.0 | 1,691 |
| Comparative Example 5 | 21.0 | 57 |
| Comparative Example 6 | 20.0 | 84 |

As is apparent from Table 1, the oxide film obtained by the method of the present invention has higher insulation property upon applying voltage and becomes strong, though it maintains small thickness and large capacitance.

### [Effect of the invention]

The present invention provides a method for forming a stable and dense oxide film having a large dielectric constant on the surface of a metal titanium substrate. By utilizing such oxide film, it becomes possible to develop a compact type mass-storage titanium electrolytic capacitor, while maintaining small leakage current and a long life.

### [Brief description of drawings]

### [Fig. 1]

Fig. 1 shows a schematic view of a titanium electrolytic capacitor.

### [Fig. 2]

Fig. 2 shows the transition of the oxygen content between the surface and the inside of Ti plate that underwent oxidation, calcination and re-oxidation.

### [Fig. 3]

(a) is an electron micrograph showing an oxide film on the surface of the Ti plate after oxidation. (b) is an electron micrograph showing the surface of Ti plate after calcination. (15 kV, x 20,000 magnification).

### [Fig. 4]

Fig. 4 shows a schematic view of a tantalum electrolytic capacitor or an aluminum electrolytic capacitor, shown together for convenience.

### [Explanation for numerals]

1 titanium substrate anode
2 titanium oxide film
3 solid electrolyte
4 carbon layer
5 silver paste
6 case

## Claims

1. A method for forming a titanium oxide film on a metal titanium substrate **characterized in that** a metal titanium substrate having on the surface thereof an oxide film having a thickness of at least 50 nm is subjected to calcination in vacuum or an inert gas atmosphere, thereby reducing the thickness of said oxide film to less than 50 nm, and the calcined surface of said metal titanium substrate is subjected to oxidation, thereby re-forming an oxide film on the surface of said metal titanium substrate.

2. The method according to Claim 1, wherein said metal titanium substrate having on the surface thereof the oxide film having the thickness of at least 50 nm is prepared by applying titanic acid or an organic titanium compound to the surface of said metal titanium substrate.

3. The method according to Claim 2, wherein said titanic acid is peroxotitanic acid.

4. The method according to Claim 2, wherein said organic titanium compound is alkoxy titanium.

5. The method according to Claim 1, wherein said metal titanium substrate having on the surface thereof the oxide film having the thickness of at least 50 nm is prepared by subjecting a metal titanium substrate to heat treatment in the presence of oxygen.

6. The method according to Claim 5, wherein said heat treatment in the presence of oxygen is conducted at 500 - 900 °C.

7. The method according to Claim 1, wherein said calcination is conducted at 500 - 900 °C.

8. The method according to Claim 1, wherein said oxidation is conducted by anodic oxidation.

9. The method according to Claim 1, wherein said oxidation is conducted by heat treatment in oxygen or an oxygen-containing atmosphere.

10. The method according to Claim 1, wherein said oxidation is conducted by heat treatment in oxygen or an oxygen-containing atmosphere, and by anodic oxidation.

11. The method according to Claim 10, wherein said heat treatment in oxygen or an oxygen-containing atmosphere is conducted at 500 - 900 °C.

12. A titanium electrolytic capacitor wherein a metal titanium substrate having an oxide film obtained by the method according to any one of Claims 1 •11 is used as an anode.

13. A method for forming an oxide film on a metal titanium substrate **characterized in that** titanic acid or an organic titanium compound is applied to the surface of the metal titanium substrate to forme an oxide film on the surface, the metal titanium substrate having the oxide film is subjected to calcination, and the calcined substrate is subjected to anodic oxidation in an electrolyte-containing solution, thereby re-forming an oxide film on the surface of said metal titanium substrate.

14. The method according to Claim 13, wherein said titanic acid is peroxotitanic acid.

15. The method according to Claim 13, wherein said organic titanium compound is alkoxy titanium.

16. The method according to Claim 13, wherein said calcination is conducted in vacuum, an inert gas atmosphere, oxygen or an oxygen-containing atmosphere at 500 - 900 °C.

17. A titanium electrolytic capacitor wherein a metal titanium substrate having an oxide film obtained by the method according to any one of Claims 13 - 16 is used as an anode.
